# EUROPEAN PATENT SPECIFICATION

(11) **EP 0 430 633 B1**
(45) Date of publication and mention of the grant of the patent: **21.09.1994**
(21) Application number: 90312851.0
(22) Date of filing: 27.11.1990
(51) Int. Cl.: A01N 43/54, A01N 25/04

(54) **Paste insecticidal compositions**
Pastenförmige insektizide Zusammensetzungen
Compositions insecticides sous forme de pâte

(30) Priority: 27.11.1989 US 441796
(43) Date of publication of application: 05.06.1991
(73) Proprietor: The Clorox Company, Oakland California 94612 (US)
(72) Inventor: Geary, Daniel C., Randolph, New Jersey 07869 (US)
(74) Representative: Smith, Sydney

(56) References cited:
- EP-A- 0 115 664
- EP-A- 0 212 226
- US-A- 4 845 103
- JOURNAL OF ECONOMIC ENTOMOLOGY, vol. 79, no. 5, October 1986, pages 1280-1286, College Park, MD, US; J.F. MILIO et al.: "Laboratory and field evaluations of hydramethylnon bait formulations for control of American and German cockroaches (Orthoptera: Blattellidae)"

## Description

The invention is an insecticidal paste composition for application from a pressurized container for the control of cockroaches, and a method for its use. More particularly, the invention relates to paste insecticidal compositions comprising a pentadienone hydrazone as a toxicant, a fatty acid, a lower alcohol, a dispersant, water, a base and oatmeal.

Existing insecticidal consumer pressurized sprays rely on contact mode-of-action for mortality, give only short-term efficacy against cockroaches, and may be repellant to the insect. Some of these sprays will be vaporized completely and so affect only those insects which are contacted. Others may be deposited as a liquid on surfaces, so that such deposits will be runny on vertical or overhead surfaces, and on non-absorbent surfaces. Such liquid deposits will also be absorbed into absorbent surfaces such as wood or wallpaper. Thus these sprays will have little if any residual activity.

In our copending, European Patent Application 90312852.8 (0430634) there are disclosed baits which can be dispensed from pressurized packages (sepro® dispensers) in the form of a gel. These baits solved some of the problems inherent in contact spray baits. They are gel-like and have form and can be ingested by roaches.

They do not readily soak into porous surfaces. They may be spread along cracks and crevices. However, these gel baits still have certain disadvantages. Although the gel bait adheres to a surface and retains more bulk than a foam, it also may run under elevated temperature, e.g. in a hot room or in hot weather.

It was also found that sprays or collapsible foams that end up as a soft thin film are physically difficult for roaches to pick up for ingestion.

In EP-A-0212226 there is disclosed an insecticidal gel composition which contains 14-22% of a particular polyoxyethylene/polyoxypropylene/polyoxyethylene block copolymer as gellant. The composition should have the proper consistency for ready application from a gel cartridge.

In Journal of Economic Entomology, Vol. 79, No. 5, October 1986, pages 1280-1286, College Park, MD,US; J.F. Milio et al, there are described laboratory and field evaluations of hydramethylon bait formulations for control of cockroaches.

In US-A-4845103 there is described a solid, non-particulate, non-repellant insecticidal bait composition for consumer household control of cockroaches which comprises a pentadienone hydrazone insecticide compound, a food attractant system and a binder. The food attractant may include oatmeal; The composition is melted and cast into a suitable mold, and then cooled to form a solid bait.

The present invention exploits the insects feeding behaviour to administer the pesticide to the insect, and provides a residue of long-lasting effectiveness. The present invention further provides a stable paste formulation for packaging in a sepro® dispenser.

The novel insecticidal paste compositions of the invention are suitable for application within and around cockroach habitats. This type of application requires compositions which possess physical properties which make them suitable for application as a bead of material in corners and hard to reach places within structures which are inhabited by cockroaches.

Pressurized spray paste bait allows delivery of non-repellent, longlasting insecticidal bait into structural cracks and voids that harbor cockroaches.

This requires that the composition be sufficiently fluent to be dispensed from an aerosol package, and be deposited in a form which will retain sufficient bulk to be ingested by cockroaches over a long period.

The paste bait of the present invention retains its bulk for a longer time, thus making it easy for the roach to ingest. On the other hand the paste is not dispensable as an aerosol, because of its higher viscosity. In the present application, the paste composition is dispensed from a sepro ® dispenser can (well known in the art) which has an internal bladder filled with the paste. The bladder is surrounded by an inert gas under pressure, e.g. carbon dioxide or nitrogen. Gas compresses the bladder to expel product when the container valve is opened. The sepro ® dispenser is more fully described in pages 405-406 of Aerosol Handbook, 1st Edition (copyright 1972).

The invention therefore provides a cockroach destroying paste composition suitable for application from a dispenser can which has an internal bladder filled with said paste composition and surrounded by an inert gas under pressure which comprises, by weight,
30 - 50% corn syrup,
5 - 18% oatmeal
3 - 6% polyoxyethylene (5) cetyl stearyl ether,
1 - 10% oleic acid,
0.25 - 2.5% pentadienone insecticide,
0.15 - 0.25% methyl paraben,
0.10 - 0.20% propyl paraben,
0.10 - 0.20% 45% aqueous solution of potassium hydroxide,
0 - 6% isopropanol (91% by volume)
and 0 - 5% glycerin
with the balance being water.

The invention can be applied to residential as well as industrial cockroach infestations for long-term control. The invention provides a means of delivering a poison cockroach bait in viscid form in situations where solid or liquid forms are inappropriate. Many species of pest insects are susceptible to control by the composition of the invention. It is particularly useful against cockroaches.

The invention has the following advantages over aerosol contact and residual sprays and current bait tray technology:
The preparation is nonrepellant. There is a higher frequency of bait placement yielding more complete treatment and control. The bait material can be placed in closer proximity to harborages than standard bait trays permitting tailoring of the bait application to structural idiosyncracies, enhancing the frequency that foraging insects will encounter the bait. The bait material is delivered in such a form and remains in such a form as to be readily available for ingestion, by insects. Supplying a non-drying, non-collapsing paste at least 1/16" to 1/4" (0.159-0.635 cm) in diameter makes it easier for the roaches to pick up the bait for ingestion. Long term efficacy can be achieved.

The paste bait composition according to the invention comprises an oil-in-water emulsion of a toxicant fatty acid mixture in a corn syrup solution also containing oatmeal. The ingredients and the amounts thereof are set forth in Table I as follows:

**TABLE I**

| Ingredient | Preferred % by weight | Range |
|---|---|---|
| Methyl Paraben, USP | 0.20 | 0.15-0.25 |
| Glycerin, USP | 2.00 | 0-5 |
| Corn Syrup | 40.00 | 30-50 |
| Water Deionized | 24.48 | |
| Compound CL 217,300 | 2.00 | 0.25-2.50 |
| Oleic Acid | 8.00 | 1-10 |
| Isopropanol (91% by volume) | 4.00 | 0-6 |
| Propylparaben, USP | 0.15 | 0.10-0.20 |
| Polyoxyethylene (5) cetyl stearyl ether | 5.00 | 3-6 |
| Oatmeal | 14.00 | 5-18 |
| Potassium Hydroxide (45%) | 0.17 | 0.10-0.20 |

It was found that the addition of oatmeal increases the attractiveness of the bait to roaches above that of baits using sugar alone. Oat Pro®, a 44 micron fraction, is preferred because valve clogging in the pressurized container is eliminated and it makes suspension of the oatmeal in the final product easier.

Even though kill is excellent, the aesthetics of the finished product are expected to be very important to the consumer. The ideal product should be water white so it is unnoticeable during the 3-6 months it remains in exposed areas. Not having that, a white product, rather than a yellow product, would be next in desirability. the product could be made white in spite of the oatmeal by adding low amounts of Titanium Dioxide if sufficient amounts of fatty acid are present. If only equivalent weights of fatty acid are present to neutralize the pentadienone toxicant, the finished product is yellow, since the fatty acid pentadienone salt itself is yellow in color at 55°C or when cooled to room temperature. It was found that additions of fatty acid oleic acid in excess of four times the equivalent weight of pentadienone eliminates the yellow color. The reason is not known. Fatty acid at the level of four times provides whiteness at pH 5.5 up to 7.5 at which point the yellowness reappears. Above the pH, of 7.5 further increases of fatty acid appear to have no effect on eliminating yellowness.

It has been found that this choice of fatty acid is important. Oleic acid results in solubilization of the pentadienone to give a liquid salt which remains so indefinitely at room temperature. This is true even if Isopropanol (91% by volume) is not present; it is also true when the pH is raised to 7 with KOH. It is extremely easy to emulsify the liquid salt at room temperature in aqueous phase by using just enough heat to liquify the solid emulsifier (POE (5) CETYL STEARYL ETHER).

In contrast, a stearic acid salt did not remain soluble at lower temperature, e.g. 40°C and could not provide a stable emulsion.

The pentadienone poison is an insecticide which is active as a stomach poison.

Pentadiene-3-one substituted amidinohydrazones are described by Tomcufcik, U.S. Patent 3,878,201, as antimalarial and anti-tubercular agents. Lovell, U.s. Patent 4,087,525 and 4,163,102 - the disclosures of which are incorporated hereby reference thereto, describes the use of these compounds as insecticides. The insecticide compounds of the Lovell patents are generally represented by the formula: 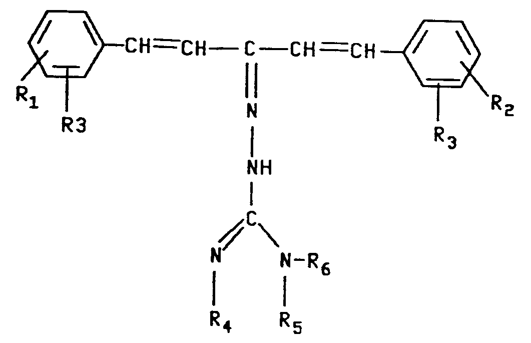
wherein R₁ and R₂ each represent hydrogen, halogen, the group -CF₃, C₁-C₄ alkyl, C₁-C₄ alkoxy, or C₁-C₄ alkylthio; R₃ is hydrogen or methyl, provided that when R₃ is methyl both R₁ and R₂ are also methyl; R₄ and R₅ represent hydrogen, C₁-C₄ alkyl or when taken together, an alkylene group of 2 to 6 carbon atoms, methyl or phenyl alkylene group of 2 to 6 carbon atoms or 1, 2-cyclohexylene; R₆ is hydrogen or C₁-C₄ alkyl; and salts thereof.

Particularly useful compounds are those represented by the formula: 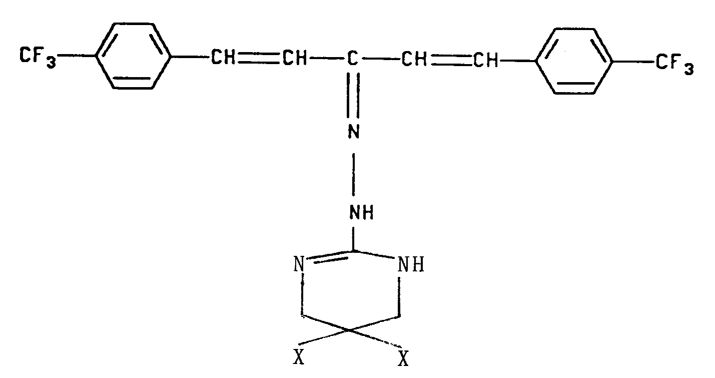
wherein X is hydrogen or methyl. The efficacy of the compounds represented by formulas (I) and (II) against a variety of Lepidopterous, Orthopterous, Dipterous and Hymenopterous insects is also described by Lovell.

However, the form and method of use described in these patents is generally related to agricultural applications where particulate baits are used and distributed over wide, open areas, and the types of bait system suggested therein are clearly not suitable for general household consumer use.

A pressurized dispensable bait formulation was prepared and evaluated as shown in the following Examples.

### EXAMPLE I

An paste bait was prepared having the following composition by weight:

| | Weight % | |
|---|---|---|
| | A,B | C |
| Corn Syrup | 40.00 | 40.00 |
| Pentadienone (CL 217,300) | 2.00 | 2.00 |
| Oleic Acid | 8.00 | 8.00 |
| Isopropanol | 6.00 | 6.00 |
| Methyl Paraben | 0.20 | 0.20 |
| Polyoxyethylene (5) Stearyl Ether | 5.00 | 5.00 |
| Water | 9.5 | 9.5 |
| Oatmeal | 14.00 (1) | 7.00 (2) |
| Potassium hydroxide | 0.17 | 0.17 |
| Glycerin | 2.00 | 2.00 |
| Propyl Paraben | 0.15 | 0.15 |

| | | |
|---|---|---|
| (1) Two identical compositions were prepared except for the type of oatmeal. In preparation A, hand ground oatmeal was used. In preparation B, a commercially ground product OATPRO® (ground 44 microns) was used. | | |
| (2) OATPRO® oatmeal. | | |

### EXAMPLE II

The paste baits of Example I was tested in the laboratory against German roaches and compared with a gel bait disclosed in our copending European Patent Application 0430634 referred to above, and against solid bait in a feed station described in U.S. Patent 4,563,836, issued January 14, 1986.

### Material and methods

The compositions of Example I were tested against laboratory model infestations comprising populations of German cockroaches confined in test arenas and provided with harborage, water, and an abundant supply of alternate food. Test arenas consist of 18" (45.7 cms) square areas bounded by glass walls 6" (15.24 cms) high greased with a mixture of petrolatum and mineral oil to prevent cockroaches escape. Each arena contains a cardboard box (2 3/4" x 5 1/4" x 7 3/4" (6.985 x 15.335 x 19.685 cms)) harborage provided with an entrance slit and a liner of pleated corrugated cardboard strip (1 1/2" x 18" (3.81 x 45.7 cms)) and a 2 oz (56.7 g) water bottle with paper towel wick. Harborage and water bottle are disposed against one wall of the arena. An alternate food supply of approximately 20 nuggets of PURINA^{R} Cat Chow is distributed around the harborage entrance. Populations of approximately 25 German cockroaches of mixed ages and both sexes are installed in each arena by random allocation of a representative sample drawn from a rearing facility. Cockroach populations are installed approximately four days prior to the introduction of bait treatments into the arenas. Arenas are maintained at room temperature (70-80°F (21.1-26.6°C)) throughout the test period.

Bait treatments are applied to model baseboards consisting of 2 - 3" x 6" (5.08-7.62 x 15.24 cms) pieces of unfinished 1/4" (0.635 cms) plywood glued along a long edge to form an L-shaped profile or to glass plates 6" (15.24 cms) square. Baits are applied at the rate of approximately 5 grams of product per arena. Bait treatments are assigned to arenas in a completely randomized manner.

Mortality of each arena is assessed seven days after the introduction of bait treatments. Cockroaches not responding with greater than one body-length of escape motion upon prodding of cerci by forceps are classified as dead. The results are shown in Table II below.

**TABLE II**

| Efficacy Test Results | |
|---|---|
| Treat | Mean Percent Reduction at Day Seven |
| Paste Bait 13355 with Ground Oatmeal | 89% |
| Paste Bait 13355 with Oatpro | 89% |
| Combat Feeding Station 9490 | 89% |
| Combat Gel Bait 13581 | 79% |

## Claims

1. A cockroach destroying paste composition suitable for application from a dispenser can which has an internal bladder filled with said paste composition and surrounded by an inert gas under pressure which comprises, by weight,
30 - 50% corn syrup,
5 - 18% oatmeal
3 - 6% polyoxyethylene (5) cetyl stearyl ether,
1 - 10% oleic acid,
0.25 - 2.5% pentadienone insecticide,
0.15 - 0.25% methyl paraben,
0.10 - 0.20% propyl paraben,
0.10 - 0.20% 45% aqueous solution of potassium hydroxide,
0 - 6% isopropanol (91% by volume)
and 0 - 5% glycerin
with the balance being water.

2. A composition as claimed in claim 1 characterized in that the pentadienone is a compound of the formula: 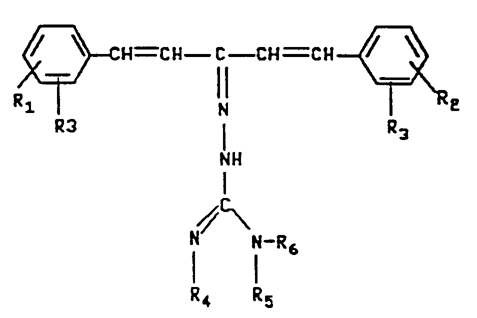 wherein R₁ and R₂ each represent hydrogen, halogen, the group - CF₃, C₁-C₄ alkyl, C₁-C₄ alkoxy, or C₁-C₄ alkylthio; R₃ is hydrogen or methyl, provided that when R₃ is methyl both R₁ and R₂ are also methyl; R₄ and R₅ represent hydrogen, C₁-C₄ alkyl or, when taken together, an alkylene group of 2 to 6 carbon atoms, methyl or phenyl alkylene group of 2 to 4 carbon atoms or 1,2-cyclohexylene; R₆ is hydrogen or C₁-C₄ alkyl; and salts thereof.

3. A composition as claimed in any of claims 1 to 2 characterized in that it also contains titanium dioxide.

4. A method for destroying cockroaches which comprises dispensing a composition as claimed in any of claims 1 to 3 from said dispenser can to deposit said composition as a paste along cracks and crevices of cockroach harborages.

## Patentansprüche

1. Pastenförmige Zusammensetzung für die Vernichtung von Schaben, geeignet für die Anwendung aus einer Verteilerbüchse, die eine Innenblase, die mit der pastenförmigen Zusammensetzung gefüllt ist und von einem Inertgas unter Druck umgeben ist, umfaßt, dadurch **gekennzeichnet,** daß sie, ausgedrückt durch das Gewicht,
30 - 50% Getreidesirup, insbesondere Maissirup,
5 - 18% Hafermehl,
3 - 6% Polyoxyethylen(5)-cetylstearylether,
1 - 10% Ölsäure,
0,25 - 2,5% Pentadienon-Insektizid,
0,15 - 0,25% Methylparaben,
0,10 - 0,20% Propylparaben,
0,10 - 0,20% einer 45%igen wäßrigen Lösung aus Kaliumhydroxid,
0 - 6% Isopropanol (91 Vol.-%) und
0 - 5% Glycerin
und als Rest Wasser enthält.

2. Zusammensetzung nach Anspruch 1, dadurch **gekennzeichnet,** daß das Pentadienon eine Verbindung der Formel: 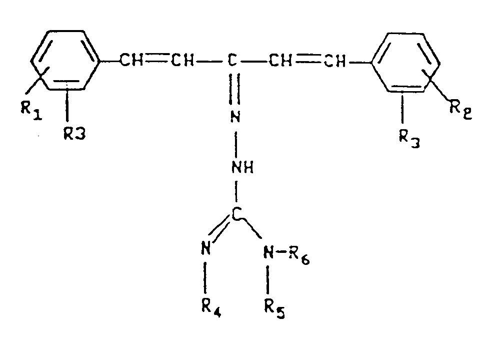 ist, worin R₁ und R₂ je Wasserstoff, Halogen, die Gruppe CF₃, C₁-C₄-Alkyl, C₁-C₄-Alkoxy oder C₁-C₄-Alkylthio bedeuten; R₃ Wasserstoff oder Methyl bedeutet, mit der Maßgabe, daß, wenn R₃ Methyl bedeutet, sowohl R₁ als auch R₂ ebenfalls Methyl bedeuten; R₄ und R₅ Wasserstoff, C₁-C₄-Alkyl bedeuten oder zusammen eine Alkylengruppe mit 2 bis 6 Kohlenstoffatomen, eine Methyl- oder Phenylalkylengruppe mit 2 bis 4 Kohlenstoffatomen oder 1,2-Cyclohexylen bedeuten; R₆ Wasserstoff oder C₁-C₄-Alkyl bedeutet; und die Salze davon.

3. Zusammensetzung nach einem der Ansprüche 1 bis 2, dadurch **gekennzeichnet,** daß sie ebenfalls Titandioxid enthält.

4. Verfahren zur Vernichtung von Schaben, dadurch **gekennzeichnet,** daß eine Zusammensetzung nach einem der Ansprüche 1 bis 3 aus einer Verteilerbüchse zur Abscheidung der Zusammensetzung als Paste längs von Rissen und Spalten von Schabenunterkünften abgegeben wird.

## Revendications

1. Composition de pâte destinée à détruire les blattes convenant à l'application à l'aide d'un récipient distributeur comportant une vésicule interne remplie de cette composition de pâte et entourée d'un gaz inerte sous pression qui comprend, en poids,
30 - 50 % de sirop de maïs,
5 - 18 % de farine d'avoine,
3 - 6 % de polyoxyéthylène (5) cétylstéaryléther,
1 - 10 % d'acide oléique,
0,25 - 2,5 % d'un insecticide pentadiénone,
0,15 - 0,25 % de méthylparabène,
0,10 - 0,20 % de propylparabène,
0,10 - 0,20 % de solution aqueuse à 45 % d'hydroxyde de potassium
0 - 6 % d'isopropanol (91 % en volume),
et 0 - 5 % de glycérine,
le reste étant constitué par de l'eau.

2. Composition selon la revendication 1, caractérisée en ce que la pentadiénone est un composé de la formule: 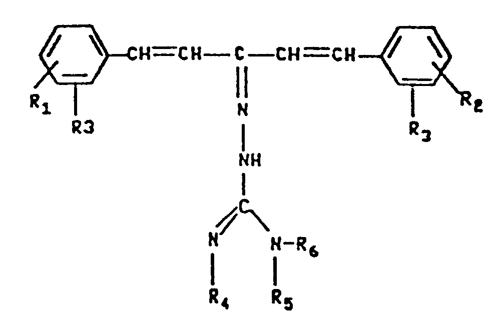 dans laquelle R₁ et R₂ représentent chacun l'hydrogène, l'halogène, le groupe -CF₃, C₁-C₄ alkyle, C₁-C₄ alcoxy, ou C₁-C₄ alkylthio ; R₃ est l'hydrogène ou le méthyle, dans la mesure où lorsque R₃ est le méthyle aussi bien R₁ que R₂ sont également le méthyle ; R₄ et R₅ représentent l'hydrogène, C₁-C₄ alkyle ou lorsqu'ils sont pris ensemble, un groupe alkylène de 2 à 6 atomes de carbone, un groupe méthyl- ou phénylalkylène de 2 à 4 atomes de carbone ou 1,2-cyclohexylène ; R₆ est l'hydrogène ou C₁-C₄ alkyle ; et ses sels.

3. Composition selon l'une quelconque des revendications 1 à 2, caractérisée en ce qu'elle contient également du dioxyde de titane.

4. Procédé pour la destruction des blattes qui comprend la distribution d'une composition selon l'une quelconque des revendications 1 à 3 par le récipient distributeur pour déposer la composition sous forme de pâte le long de fissures et crevasses des lieux infestés par les blattes.
